# EUROPÄISCHE PATENTSCHRIFT

(11) **EP 3 583 474 B1**
(45) Veröffentlichungstag und Bekanntmachung des Hinweises auf die Patenterteilung: **09.03.2022**
(21) Anmeldenummer: 18700214.2
(22) Anmeldetag: 11.01.2018
(51) Int. Cl.: G05B 19/042

(54) **VERPACKUNGSANLAGENDATENVERMITTLUNG SOWIE VERFAHREN ZUM BETREIBEN EINER VERPACKUNGSANLAGENDATENVERMITTLUNG**
PACKAGING LINE DATA SWITCHING EXCHANGE AND METHOD FOR OPERATING A PACKAGING LINE DATA SWITCHING EXCHANGE
DISPOSITIF DE TRANSMISSION DE DONNÉES D'INSTALLATION D'EMBALLAGE AINSI QUE PROCÉDÉ PERMETTANT DE FAIRE FONCTIONNER UN DISPOSITIF DE TRANSMISSION DE DONNÉES D'INSTALLATION D'EMBALLAGE

(30) Priorität: 15.02.2017 DE 102017103018
(43) Veröffentlichungstag der Anmeldung: 25.12.2019
(73) Patentinhaber: SIG Technology AG, 8212 Neuhausen am Rheinfall (CH)
(72) Erfinder: EICKHOFF, Matthias, 52477 Alsdorf (DE); HOLZKÄMPER, Peter, 52499 Baesweiler (DE)
(74) Vertreter: Cohausz & Florack
(86) Internationale Anmeldenummer: PCT/EP2018/050604
(87) Internationale Veröffentlichungsnummer: WO 2018/149563

(56) Entgegenhaltungen:
- EP-A2- 1 880 253
- WO-A1-2012/130586
- WO-A1-2016/176278

## Beschreibung

Der Gegenstand betrifft eine Verpackungsanlagendatenvermittlung sowie ein entsprechendes Verfahren Es sind Verpackungsanlagen bekannt, in denen häufig eine Vielzahl von verschiedenen Einrichtungen und Komponenten zum Einsatz kommen, wie beispielsweise Füllmaschinen, Applikatoren zum Aufbringen von Verschlüssen und/oder Trinkhalmen, Weichen, Sammelpacker und Kartonierer. Diese Einrichtungen stammen meist von verschiedenen Herstellern und stellen Verpackungsanlagendaten wie beispielsweise Verpackungsanlagenzustandsdaten, die repräsentativ für den Zustand der jeweiligen Einrichtungen sind, in verschiedenen Datenformaten zur Verarbeitung durch eine Verpackungsanlagendatenvermittlung und/oder andere Einrichtungen/Komponenten/Anwendungen der Verpackungsanlage zur Verfügung.

Auch stellen Einrichtungen unterschiedlicher Hersteller unterschiedliche Verpackungsanlagendatensätze zur Verfügung.

Ein Problem bei diesen Verpackungsanlagen ist daher, dass die von den Einrichtungen der Verpackungsanlage zur Verfügung gestellten Verpackungsanlagendaten aufgrund der unterschiedlichen Datenformate nicht einheitlich weiterverarbeitet und ausgewertet werden können, so dass für jede Verpackungsanlage individuelle Lösungen zur Weiterverarbeitung und Auswertung der Verpackungsanlagendaten entwickelt werden müssen.

Auch werden Verpackungsanlagen häufig nachträglich erweitert, so dass die Lösungen zur Weiterverarbeitung und Auswertung der Verpackungsanlagendaten ebenfalls entsprechend erweitert und angepasst werden müssen.

Aus der EP 1 880 253 A2 ist ein industrielles Datenbanksystem bekannt. Hierbei übernehmen Proxy-Komponenten die Funktion einer Übersetzung zwischen verschiedenen Kommunikationsprotokollen. Doch schafft die Lehre der EP 1 880 253 A2 keine Vereinheitlichung der Datenformate und geht nicht auf die Komplikationen uneinheitlicher Datenformate verschiedener Maschinen ein. Nutzer können sich in der EP 1 880 253 A2 auf Zustandsänderungen abonnieren.

Aus der WO 2012/ 130 586 A1 ist ein System bekannt, das der Analyse und Optimierung einer technischen Anlage dient. Eine Datenerfassungseinheit kann Daten aus verschiedenen Datenformaten in ein einheitliches Format umwandeln und zyklisch in einen zentralen Datenspeicher übertragen.

Die WO 2016/ 176 278 A1 offenbart ein System, in dem Produktgruppen zu Produktionsmaschinen zugeordnet werden können. Importier-Module können hierbei Datenformate umwandeln.

Daher lag dem Gegenstand die Aufgabe zugrunde, eine flexible Datenhaltung für Verpackungsanlagen zur Verfügung zu stellen, die an verschiedene Maschinenschnittstellen verschiedenster Verpackungseinrichtungen und Komponenten besonders einfach anpassbar ist.

Diese Aufgabe wird gegenständlich durch eine Verpackungsanlage mit einer Verpackungsanlagendatenvermittlungseinrichtung nach Anspruch 1 gelöst. Ferner wird die Aufgabe durch ein Verfahren nach Anspruch 13 gelöst.

Unter einer Verpackungsanlage kann, wie bereits Eingangs beschrieben, eine Anlage zum Verpacken von Waren wie beispielweise Lebensmitteln verstanden werden. Insbesondere kann unter einer Verpackungsanlage eine Getränkeabfüllanlage und/oder ein Teil einer Getränkeabfüllanlage verstanden werden. In solchen Anlagen kommt häufig eine Vielzahl von verschiedenen Komponenten zum Einsatz wie beispielsweise Füllmaschinen, Applikatoren zum Aufbringen von Verschlüssen und/oder Trinkhalmen, Weichen, Sammelpacker und Kartonierer. Auf diesen Einrichtungen laufen verschiedene Anwendungen (z.B. in Form eines durch einen Prozessor dieser Komponente ausgeführten Computerprogramms). Die verschiedenen Komponenten und Anwendungen der Verpackungsanlage stellen Verpackungsanlagendaten (insbesondere Verpackungsanlagenzustandsdaten, Zustandsdaten bzw. Zustandswerte von Parametern der Verpackungsanlage) in verschiedenen Datenformaten und/oder über verschiedene Maschinenschnittstellen zur Verarbeitung durch eine Verpackungsanlagendatenvermittlung und/oder andere Einrichtungen und/oder Anwendungen zur Verfügung. Die mit den Maschinenschnittstellen ausgetauschten Informationen lassen sich im Weiteren mit Softwareschnittstellen, wie sie nachfolgend beschrieben werden, verarbeiten.

Aus der Praxis sind Karton/Kunststoff/Metall-Verbundverpackungen bekannt, die für unterschiedliche fließfähige oder schüttfähige Produkte verwendet werden. Das hauptsächliche Anwendungsgebiet entsprechender Karton/Kunststoff/Metall-Verbundpackungen ist das Abpacken von Getränken und wärmebehandelten, insbesondere pasteurisierten Nahrungsmitteln. Die bekannten Packungen bzw. Verpackungen sind in unterschiedlichen Formen erhältlich. Diese sind typischerweise quaderförmig, kubisch und zylindrisch. Ein großer Unterschied besteht z.B. noch hinsichtlich des Packungskopfs, der überwiegend als sogenannter Flachgiebel oder Schräggiebel ausgebildet ist.

Verpackungen können auf unterschiedliche Weisen und aus verschiedensten Materialien hergestellt werden. Eine weitverbreitete Möglichkeit ihrer Herstellung besteht darin, aus dem Verpackungsmaterial einen Zuschnitt herzustellen, aus dem durch Falten und weitere Schritte zunächst ein Packungsmantel hergestellt wird und ein Ende desselben verschlossen werden kann. Durch den noch wenigstens teilweise offenen Teilbereich des Packungsmantels kann die Packung dann gefüllt werden. Bei einigen dieser Verfahren wird dazu ein Packmittelzuschnitt an einen Dorn eines Dornrads angeformt.

Diese Herstellungsart hat unter anderem den Vorteil, dass die Zuschnitte und Packungsmäntel sehr flach sind und somit platzsparend gestapelt werden können. Auf diese Weise können die Zuschnitte bzw. Packungsmäntel an einem anderen Ort hergestellt werden, als die Faltung und Befüllung der Packungsmäntel erfolgt. Als Material werden häufig Verbundstoffe eingesetzt, beispielsweise ein Verbund aus mehreren dünnen Lagen aus Papier, Pappe, Kunststoff oder Metall, insbesondere Aluminium. Derartige Verpackungen finden insbesondere in der Lebensmittelindustrie große Verbreitung.

Unter einer Verpackungsanlagendatenvermittlung kann beispielsweise eine von einer Servervorrichtung oder einem Serversystem (z.B. der gegenständlichen Servervorrichtung oder dem gegenständlichen Serversystem, das sowohl virtuell als auch unmittelbar gebildet sein kann) bereitgestellte Funktion zum Vermitteln von Verpackungsanlagenzustandsdaten (Verpackungsanlagenparametern und/oder Zustandsdaten bzw. Zustandswerte) zwischen verschiedenen Anwendungen und/oder Einrichtungen / Komponenten einer Verpackungsanlage verstanden werden. Zum Beispiel wird die Verpackungsanlagendatenvermittlung durch ein durch zumindest Teile eines Prozessors der Servervorrichtung oder des Serversystems ausgeführtes Computerprogramm (z.B. das gegenständliche Computerprogramm) bereitgestellt. Beispielsweise handelt es sich bei dem Computerprogramm um ein Middlewareprogramm und/oder ein Dienstschichtprogramm.

Ein Zwischenspeicher der Verpackungsanlagendatenvermittlung enthält beispielsweise nur eine begrenzte Anzahl von Zustandswerten für verschiedene Zustände der Verpackungsanlage. Beispielsweise umfasst ein Zwischenspeicher der Verpackungsanlagendatenvermittlung nur aktuelle Zustandswerte für verschiedene Zustände der Verpackungsanlage.

Es versteht sich, dass ein Zwischenspeicher der Verpackungsanlagendatenvermittlung in beispielhaften Ausführungsformen neben den aktuellen Zustandswerten für verschiedene Zustände der Verpackungsanlage auch eine begrenzte Anzahl von historischen Zustandswerten für die verschiedenen Zustände der Verpackungsanlage umfassen kann. Der Zustandswert eines Zustandsdatums bzw. einer Variable kann zu verschiedenen Zeiten unterschiedlich sein. Es ist möglich zu einer Variable bzw. einem Zustandsdatum jeweils einen aktuellen Zustandswert und ggf. historische Zustandswerte zu speichern. Zustandswerte können mit einem Zeitstempel versehen sein, so dass eine zeitliche Zuordnung eines Zustandswertes möglich ist und eine zeitliche Abfolge von Zustandswerten eines Zustandsdatums nachvollzogen werden kann.

Der Zwischenspeicher dient beispielsweise als Cache, um zu vermeiden, dass die Verpackungsanlagendatenvermittlung für den Zugriff auf jeden Zustandswert auf den persistenten Speicher zugreifen muss. Auch kann der Zwischenspeicher als Puffer dienen, um Ausfallzeiten im persistenten Datenspeicher zu puffern. Der Zwischenspeicher kann Ausfallzeiten zwischen der Verpackungsanlagendatenvermittlung und dem persistenten Speicher überbrücken. Insbesondere ist der Zwischenspeicher als bidirektionaler Speicher gebildet, der sowohl Lesezugriffe als auch Schreibzugriffe ermöglicht.

Zum Beispiel ist der Zwischenspeicher der Verpackungsanlagendatenvermittlung ein Teil eines Speichers (z.B. eines Programm- und/oder Hauptspeichers) der Servervorrichtung, die die Verpackungsanlagendatenvermittlung bereitstellt, oder des virtuellen Servers, der die Verpackungsanlagendatenvermittlung bereitstellt.

Die Verpackungsanlagendatenvermittlung, insbesondere ein Programmodul implementiert zumindest eine Instanz einer Dateneingangsschnittstelle zum zumindest mittelbaren Kommunizieren mit Einrichtungen / Komponenten und/oder Anwendungen der Verpackungsanlage über das Programmmodul bereit. Wenn nachfolgend von einer Dateneingabeschnittstelle die Rede ist, so kann darunter auch eine Instanz einer Dateneingangsschnittstelle verstanden werden. Insbesondere kann ein Programmmodul bzw. eine Instanz eines Programmmoduls Methoden zur Verfügung stellen, mit denen sich Instanzen von Dateneingangsschnittstellen instanziieren lassen oder ein Programmmodul kann eine Methode als Dateneingangsschnittstelle zur Verfügung stellen.

Es versteht sich, dass die Verpackungsanlagendatenvermittlung über die Dateneingangsschnittstelle mit einem Programmodul anderer Einrichtungen / Komponenten und/oder Anwendungen der Verpackungsanlage zumindest mittelbar kommunizieren kann (z.B. Daten von den anderen Komponenten und/oder Anwendungen der Verpackungsanlage erhalten und/oder Fehler- und/oder Bestätigungsbenachrichtigungen und/oder Kommandos an andere Komponenten und/oder Anwendungen der Verpackungsanlage senden). Wenn nachfolgend von einem Programmmodul die Rede ist, so kann darunter auch eine Instanz eines Programmmoduls verstanden werden.

Die Kommunikation findet statt, wenn eine Verpackungseinrichtung oder Komponenten und/oder Anwendung der Verpackungsanlage unter Verwendung eines Programmmodul (z.B. ein Plug-In) über die Dateneingangsschnittstelle kommuniziert.

Ein Programmmodul kann beispielsweise an die Einrichtung / Komponente und/oder Anwendung der Verpackungsanlage angepasst sein. Zum Beispiel ist ein Programmmodul eingerichtet, von der Einrichtung / Komponente und/oder Anwendung der Verpackungsanlage erhaltene Daten aufzubereiten und/oder umzuwandeln (z.B. in ein vorgegebenes Datenformat umwandeln) und anschließend über die Dateneingangsschnittstelle auszugeben bzw. über die Dateneingangsschnittstelle zu kommunizieren. Alternativ oder zusätzlich ist ein solches Programmmodul beispielsweise eingerichtet, von über die Dateneingangsschnittstelle erhaltene Bestätigungs- und/oder Fehlerbenachrichtigungen aufzubereiten, zu verarbeiten und/oder umzuwandeln (z.B. in ein vorgegebenes Datenformat umzuwandeln) und anschließend ggfs. an die Einrichtung / Komponente und/oder Anwendung der Verpackungsanlage weiterzuleiten.

Durch das Anpassen eines Programmmoduls an eine jeweilige Komponente oder Verpackungseinrichtung wird zweierlei erreicht. Einerseits kann das Programmmodul über eine standardisierte Dateneingangsschnittstelle kommunizieren. Diese Dateneingangsschnittstelle kann für alle Arten von Programmmodulen identisch implementiert sein. Insbesondere kann jedes Programmmodul eine Implementierungen einer Dateneingangsschnittstelle zur Verfügung stellen. Die Verpackungsanlagendatenvermittlung kann die Dateneingangsschnittstelle als Funktion, Methode und/oder Klasse zur Verfügung stellen. Eine Instanz eines Programmmoduls .kann eine Dateneingangsschnittstelle zur Kommunikation nutzen.

Auf der anderen Seite kann jeweils ein Programmmodul für jeweils einen Anwendungszweck konfiguriert sein. Er wurde erkannt, dass verschiedene Verpackungseinrichtungen / Komponenten ihre Daten auf höchst unterschiedliche Art und Weise über teilweise proprietäre Maschinenschnittstellen zur Verfügung stellen und verschiedenste Datenmodelle und Datenstrukturen erfordern. Die Verpackungsanlagendatenvermittlung muss sich gegenständlich um solche herstellerspezifische bzw. einrichtungsspezifische Einflüsse keine Gedanken mehr machen. Ein Systemintegrator muss lediglich für die jeweilige Einrichtungsschnittstelle ein geeignetes Programmmodul erstellen und kann anschließend auf den vollen Funktionsumfang der Verpackungsanlagendatenvermittlung zugreifen. Auch die Erstellung von komplexeren Zustandsdaten und die Berechnung von Anlagenparametern können individuell in einem Programmmodul vorgesehen sein. Der Zugriff auf Zustandsdaten bzw. Zustandswerte erfolgt über eine Zugriffschnittstelle (vorzugsweise ausschließlich über die Zugriffschnittstelle) und Zustandsdaten bzw. Zustandswerte werden über die Dateneingangsschnittstelle (vorzugsweise ausschließlich über die Dateneingangsschnittstelle) an die Verpackungsanlagendatenvermittlung kommuniziert.

Über die Dateneingangsschnittstelle kann die Verpackungsanlagendatenvermittlung Verpackungsanlagenzustandsdaten von Einrichtungen / Komponenten und/oder Anwendungen der Verpackungsanlage über das jeweils angepasste Programmmodul erhalten.

Zum Beispiel ist die Dateneingangsschnittstelle der Verpackungsanlagendatenvermittlung eingerichtet, Verpackungsanlagenzustandsdaten zu erhalten, beispielweise Verpackungsanlagenzustandsdaten in einem vorgegeben Datenformat zu erhalten. Diese Daten werden gegenständlich ausschließlich über ein Programmmodul zur Verfügung gestellt, welches den Datenkonventionen der Verpackungsanlagendatenvermittlung folgt und auf der anderen Seite für den jeweiligen Anwendungsbereich angepasst ist, insbesondere an eine Schnittstelle einer Verpackungseinrichtung angepasst ist.

Dass die ersten Verpackungsanlagenzustandsdaten einen ersten Zustandswert einer Verpackungsanlage repräsentieren, kann beispielsweise so verstanden werden, dass die ersten Verpackungsanlagenzustandsdaten den ersten Zustandswert und/oder eine Repräsentation des ersten Zustandswerts enthalten. Ferner können die ersten Verpackungsanlagenzustandsdaten beispielsweise Metadaten enthalten, die die ersten Verpackungsanlagenzustandsdaten und/oder den ersten Zustandswert beschreiben. Beispiele für solche Metadaten sind beispielsweise eine Herkunft der ersten Verpackungsanlagenzustandsdaten und/oder des ersten Zustandswerts, ein Ziel der ersten Verpackungsanlagenzustandsdaten und/oder des ersten Zustandswerts und/oder eine Einheit des ersten Zustandswerts.

Unter einem Zustandswert einer Verpackungsanlage kann beispielsweise ein für einen aktuellen und/oder einen vergangenen Zustand der Verpackungsanlage und/oder einer Komponente der Verpackungsanlage charakteristischer Wert verstanden werden. Beispiele für einen solchen Zustandswert sind beispielsweise ein durch einen Sensor der Verpackungsanlage und/oder einer Komponente der Verpackungsanlage erfasster Messwert und/oder eine Kennzahl der Verpackungsanlage und/oder einer Komponente der Verpackungsanlage wie beispielsweise eine Anlagen- und/oder Komponentenleistung (z.B. Verpackungen / Stunde) und/oder eine Gesamtanlageneffektivität (auf Englisch: Overall Equipment Effectiveness, OEE). Dies kann auch als Anlagenparameter verstanden werden.

Der durch die ersten Verpackungsanlagenzustandsdaten repräsentierte zumindest eine erste Zustandswert wird beispielsweise in einer Datenbank (einem persistenten Speicher) gespeichert, der kein Teil der Verpackungsanlagendatenvermittlung sein muss. Zum Beispiel ist der persistente Speicher Teil eines von der Verpackungsanlagendatenvermittlung verschiedenen Datenbanksystems. Der persistente Speicher dient beispielsweise zum dauerhaften Speichern der durch die Verpackungsanlagendatenvermittlung erhaltenen Zustandswerte. Zum Beispiel werden in dem persistenten Speicher historische und aktuelle Zustandswerte für verschiedene Zustände der Verpackungsanlage gespeichert. Dabei soll unter einem aktuellen Zustandswert ein für einen aktuellen Zustand der Verpackungsanlage repräsentativer Wert verstanden werden. Dies ist beispielsweise der Zustandswert für diesen Zustand, der durch Verpackungsanlagenzustandsdaten repräsentiert wird, die zuletzt für diesen Zustand durch eine Instanz der Verpackungsanlagendatenvermittlung erhalten wurde. Ein Zustandswert kann auch insbesondere durch ein Programmmodul berechnet und bereitgestellt werden. Dementsprechend ist ein historischer Zustandswert für einen Zustand beispielsweise ein durch Verpackungsanlagenzustandsdaten repräsentierter Zustandswert, der zuvor (d.h. vor den zuletzt für diesen Zustand erhaltenen Verpackungsanlagenzustandsdaten) durch die Verpackungsanlagendatenvermittlung erhalten wurde. Zustandswerte können in einem Zustandsdatum (Variable) gespeichert werden. Dabei können aktuelle und historische Zustandswerte gespeichert sein. Sinnvoll kann es sein, wenn Zustandswerte in einer zeitlichen Abfolge, insbesondere seriell hintereinander gespeichert sind.

Die Verpackungsanlagendatenvermittlung stellt eine Datenspeicherschnittstelle zum Kommunizieren mit dem persistenten Speicher bereit. Es versteht sich, dass die Verpackungsanlagendatenvermittlung durch die Datenspeicherschnittstelle mit dem persistenten Speicher über ein Datenbankmodul kommuniziert (z.B. zu speichernde Daten und/oder Werte an den persistenten Speicher senden und/oder Speicherfehler- und/oder Speicherbestätigungsbenachrichtigungen von dem persistenten Speicher erhalten).

Durch das Anpassen des Datenbankmoduls an einen persistenten Speicher wird erreicht, dass die Verpackungsanlagendatenvermittlung mit unterschiedlichen Datenspeichern arbeiten kann, wobei jeweils eine Datenbank von einem hierfür angepassten Datenbankmodul angesprochen werden kann. Das Datenbankmodul kann mit einer standardisierten Datenspeicherschnittstelle kommunizieren. Diese Datenspeicherschnittstelle kann für alle Arten von Datenbankmodulen identisch sein. Auf der anderen Seite kann jeweils ein Datenbankmodul für jeweils eine Datenbank konfiguriert sein. Es wurde erkannt, dass verschiedene Datenbanken ihre Daten auf höchst unterschiedliche Art und Weise über teilweise proprietäre Schnittstellen zur Verfügung stellen bzw. einlesen und verschiedenste Datenmodelle und Datenstrukturen erfordern. Die Verpackungsanlagendatenvermittlung muss sich gegenständlich um solche herstellerspezifische bzw. einrichtungsspezifische Einflüsse keine Gedanken mehr machen. Ein Systemintegrator muss lediglich für die jeweilige Datenbank ein geeignetes Datenbankmodul erstellen und kann anschließend auf den vollen Funktionsumfang der Verpackungsanlagendatenvermittlung zugreifen.

Unter dem Speichern des durch die ersten Verpackungsanlagenzustandsdaten repräsentierten zumindest einen ersten Zustandswerts in dem persistenten Speicher durch eine Datenspeicherschnittstelle der Verpackungsanlagendatenvermittlung kann beispielsweise verstanden werden, dass die Datenspeicherschnittstelle der Verpackungsanlagendatenvermittlung den ersten Zustandswert zum Speichern in dem persistenten Speicher über das Datenbankmodul an den persistenten Speicher kommuniziert.

Mit Hilfe der gegenständlichen Verpackungsanlagendatenvermittlung wird eine Datenkonsistenz über alle daran angeschlossenen Einrichtungen / Komponenten und Anwendungen sichergestellt. Es wird sichergestellt, dass Zustandsdaten verlässlich zugreifbar sind und eine hohe Datensicherheit gewährleistet ist. Ferner wird sichergestellt, dass über eine einheitliche Datenstruktur und eine zentrale Datenhaltung die gesamte Verpackungsanlage sowie alle damit arbeitenden Einrichtungen / Komponenten und Anwendungen stets die gleiche Datenbasis haben. Es werden Speicher und Zugriffkonflikte verhindert. Auch wird verhindert, dass Zustandsdaten inkonsistent vorgehalten werden.

Gegenständlich wird vorgeschlagen, dass die Verpackungsanlagendatenvermittlung eine Zugriffsschnittstelle aufweist. Über die Zugriffsschnittstelle können Programmmodule auf Daten innerhalb der Verpackungsanlagendatenvermittlung zugreifen. Ein Zugriff erfolgt hier vorzugsweise lesend. Die Zustandsdaten, insbesondere die Zustandswerte, können über die Zugriffsschnittstelle aufgerufen werden. Auch ermöglicht die Zugriffsschnittstelle den Programmmodulen, bestimmte Zustandsdaten zu abonnieren. Dann erfolgt eine automatische Signalisierung in Richtung der Programmmodule durch die Zugriffschnittstelle, wenn entsprechende Zustandsdaten oder Zustandswerte verändert werden.

Zustandsdaten innerhalb der Verpackungsanlagendatenvermittlung können eindeutig identifiziert werden. Hierzu kann beispielsweise anhand von Metadaten, hier insbesondere anhand von die Zustandsdaten eindeutig identifizierenden Kriterien (Unique-Kriterium) identifiziert werden. Ein solches Unique-Kriterium kann innerhalb der Metadaten insbesondere ein Name sowie eine Datenquelle sein. Die Verpackungsanlagendatenvermittlung stellt eine Datenkonsistenz sicher. Mit Hilfe der Zugriffsschnittstelle können Programmmodule Zugriffe auf Zustandsdaten abonnieren. Hierzu können sich Programmmodule an der Zugriffsschnittstelle via Abonnement für ein bestimmtes Zustandsdatum anmelden. Anschließend wird in der Zugriffsschnittstelle bzw. der Verpackungsanlagendatenvermittlung überwacht, ob sich an diesem Zustandsdatum etwas ändert und das abonnierende Programmmodul wird über die Zugriffsschnittstelle über eine solche Änderung informiert.

Der Zustandswert des geänderten Zustandsdatums kann über das Programmmodul entweder über die Zugriffsschnittstelle ausgelesen oder über eine Zwischenspeicherschnittstelle am Zwischenspeicher ausgelesen werden. Die Zwischenspeicherschnittstelle erlaubt einen Zugriff auf den Zwischenspeicher durch die Programmmodule. Dieser Zugriff ist vorzugsweise nur lesend, kann aber auch schreibend sein. Wenn Nachfolgend von der Leseschnittstelle die Rede ist, kann damit die Zwischenspeicherschnittstelle gemeint sein.

Um sicherzustellen, dass der Zwischenspeicher, die Dateneingangsschnittstelle, die Datenspeicherschnittstelle und vorzugsweise die Zugriffsschnittstelle verlässlich und eindeutig auf die Zustandsdaten zugreifen können, bilden diese ein gemeinsames Vermittlungsnetz. Um ferner sicherzustellen, dass Daten innerhalb der Verpackungsanlagendatenvermittlung ausschließlich über die genannten Schnittstellen veränderbar sind, wird vorgeschlagen, dass ein Programmmodul ausschließlich über das Vermittlungsnetz Zustandsdaten mit der Verpackungsanlagendatenvermittlung austauschen kann.

Die Programmmodule sind vorzugsweise transparent zueinander und können nicht untereinander kommunizieren. Vielmehr erfolgt jegliche Kommunikation ausschließlich über die Verpackungsanlagendatenvermittlung und insbesondere ausschließlich über die Dateneingangsschnittstelle und die Zugriffsschnittstelle. Demzufolge wird auch vorgeschlagen, dass der Zwischenspeicher, die Dateneingangsschnittstelle und die Datenspeicherschnittelle autark voneinander betrieben sind. Das bedeutet, dass Instanzen von Programmmodulen unabhängig voneinander über die eine Dateneingangsschnittstelle und eine Zugriffsschnittstelle kommunizieren. Zwischen den Schnittstellen findet eine Kommunikation vorzugsweise ausschließlich über einen Nachrichtenbus (message bus) statt. Dieser ist in dem Vermittlungsnetz eingebunden. Ein Zugriff auf eine der Schnittstellen wird durch die jeweils anderen Schnittstellen nicht unmittelbar bemerkt. Jedes Instanz eines Programmmodul führt die Datenkommunikation mit den zugeordneten Schnittstellen selbsttätig durch.

Wie erläutert, greift ein Programmmodul über die Zugriffsschnittelle auf die Zustandsdaten innerhalb der Anlagendatenvermittlung zu. Insofern wird auch vorgeschlagen, dass die Zugriffsschnittstelle zur Kommunikation mit dem Programmmodul eingerichtet ist. Die Zugriffsschnittstelle bildet eine definierte Schnittstelle, auf die verschiedenste Programmmodule zugreifen können. Verpackungsanlagenzustandsdaten können hierüber aus der Datenvermittlung entnommen werden. Auch bietet die Zugriffsschnittstelle eine Möglichkeit, über Veränderungen an Zustandsdaten informiert zu werden. Hierzu sendet die Zugriffsschnittstelle bei entsprechenden Datenveränderungen Informationen an die mit der Zugriffsschnittstelle verbundenen Programmmodule.

Auch wird vorgeschlagen, dass die Dateneingangsschnittstelle zur Kommunikation mit zumindest einem Verpackungsanlagenparameter bestimmenden Programmmodul eingerichtet ist. Wie bereits erläutert, können Verpackungsanlagenparameter wie beispielsweise ein OEE oder sonstige Informationen die Verpackungsanlage betreffend aus den Verpackungsanlagenzustandsdaten errechnet werden. Jede dieser Berechnungen erfordert einen zumindest lesenden Zugriff auf die Verpackungsanlagenzustandsdaten. Ergebnisse der Berechnung können als neue Verpackungsanlagenzustandsdaten über die Dateneingangsschnittstelle in die Datenvermittlung eingespeist werden. Das heißt, dass ein Programmmodul, welches zur Berechnung von Verpackungsanlagenparametern eingerichtet ist, zunächst lesend auf die Zustandsdaten zugreift um anschließend bei einer Veränderung oder Errechnung eines Verpackungsanlagenzustandswertes diesen Zustandswert über die Dateneingangsschnittstelle in die Verpackungsanlagendatenvermittlung einspeist.

Wie bereits erläutert, können Verpackungsanlagenzustandsdaten aus Metadaten und Zustandswerten gebildet sein. Mit Hilfe der Metadaten lassen sich insbesondere die Zustandsdaten eindeutig identifizieren und zuordnen. Die Zustandswerte beschreiben dann bestimmte Zustände, insbesondere von Sensoren erfasste Werte oder über Algorithmen berechnete Werte.

Häufig ist es notwendig, dass Programmmodule auf Verpackungsanlagenzustandsdaten zugreifen. Um einen solchen Zugriff zu initiieren, müssen die Programmmodule Kenntnis über die innerhalb der Verpackungsanlagendatenvermittlung verfügbaren Verpackungsanlagenzustandsdaten haben. Um dies zu ermöglichen, hat der Zwischenspeicher vorzugsweise eine Leseschnittstelle, über die ein unmittelbarer Lesezugriff auf zumindest die Metadaten ermöglicht wird.

In diesem Zusammenhang sei erwähnt, dass die Leseschnittstelle des Zwischenspeichers vorzugsweise ausschließlich zum Auslesen von Metadaten eingerichtet ist. Es wird bevorzugt, dass weder ein lesender noch ein schreibender Zugriff auf Zustandswerte der Zustandsdaten über die Leseschnittstelle möglich ist. Über die Leseschnittstelle kann beispielsweise abhängig von einem Filter eine Liste aller Zustandsdaten ausgegeben werden. Filterkriterien können beispielsweise anhand der Metadaten definiert werden. Hierbei kann beispielsweise über ein Programmmodul ein Filter über die Datenquelle gelegt werden. Anschließend lassen sich beispielsweise über die Leseschnittstelle Metadaten über alle Zustandsdaten ausgeben, die ein bestimmtes Filterkriterium erfüllen. Es sei erwähnt, dass darüber hinaus auch ein lesender Zugriff auf Zustandswerte der Zustandsdaten über die Leseschnittstelle möglich ist. Bevorzugt lassen sich Zustandsdaten aber ausschließlich über die Dateneingabeschnittstelle schreibend in die Verpackungsanlagendatenvermittlung einspeisen.

Gegenständlich wird vorgeschlagen, dass die Zugriffsschnittstelle Datenänderungen in dem Datenspeicher überwacht. Sobald sich Zustandsdaten ändern, insbesondere Zustandswerte von Zustandsdaten, können diese Informationen in der Zugriffsschnittstelle detektiert werden. Mit der Zugriffsschnittstelle verbundene Programmmodule, die anhand von entsprechenden Abonnements auf die geänderten Zustandsdaten zugreifen wollen, können im Anschluss durch die Zugriffsschnittstelle informiert werden. Was die entsprechenden Programmmodule dann mit dieser Information tun, obliegt bevorzugt ausschließlich den Programmmodulen. Denkbar wäre dann ein lesender Zugriff auf Zustandswerte über die Zugriffsschnittstelle oder die Leseschnittstelle des Zwischenspeichers unter Verwendung der Metadaten, um die Zustandsdaten zu identifizieren, dessen Zustandswerte gelesen werden sollen.

Gemäß einem Ausführungsbeispiel wird vorgeschlagen, dass die Verfügbarkeit von Verpackungsanlagenzustandsdaten über den Zwischenspeicher abfragbar ist. Wie bereits erläutert, kann hierzu die Leseschnittstelle des Zwischenspeichers verwendet werden. Insbesondere können Metadaten von Zustandsdaten abgefragt werden. Ein schreibender Zugriff auf sowohl Metadaten als auch Zustandswerte ist vorzugsweise ausschließlich über die Dateneingangsschnittstelle möglich.

Der Zwischenspeicher ist so ausgestattet, dass er vorzugsweise Zustandsdaten zwischenspeichert, insbesondere in Form eines Caches. Dabei ist es nicht notwendig, dass der Zwischenspeicher alle Zustandsdaten permanent vorhält. Insbesondere ist es möglich, dass der Zwischenspeicher in Teilen nur Metadaten vorhält. Auch ist es möglich, dass der Zwischenspeicher nur eine Teilmenge aller verfügbaren Zustandsdaten bzw. deren Metadaten vorhält. Es wird vorgeschlagen, dass zum Start des Systems der Zwischenspeicher vorzugsweise Metadaten zu allen verfügbaren Zustandsdaten aus dem persistenten Datenspeicher abfragt und für eine anschließende Abfrage durch die Programmmodule oder innerhalb der Datenvermittlung bereithält. Die Zustandswerte können dann bedarfsweise aus der Datenbank nachgeladen werden, sollten Programmmodule darauf zugreifen wollen.

Es ist jedoch auch möglich, dass bestimmte Zustandsdaten weder als Metadaten noch als Zustandswerte in dem Zwischenspeicher verfügbar sind. Um den Programmmodulen alle verfügbaren Zustandsdaten bereitstellen zu können, wird vorgeschlagen, dass der Zwischenspeicher bei einer Abfrage einer Verfügbarkeit von Verpackungsanlagenzustandsdaten zunächst intern nach Verpackungsanlagenzustandsdaten sucht. Sollte zu einer Abfrage keine Information intern vorhanden sein, also ein negatives Suchergebnis vorliegen, kann der Zwischenspeicher so ausgestattet sein, dass er über die Datenspeicherschnittstelle in der Datenbank nach entsprechenden Verpackungsanlagenzustandsdaten sucht. Werden in der Datenbank entsprechende Zustandsdaten gefunden, können vorzugsweise zunächst die Metadaten hierzu dem Zwischenspeicher über die Datenspeicherschnittstelle zur Verfügung gestellt werden.

Gemäß einem Ausführungsbeispiel wird vorgeschlagen, dass Zugriffe auf die Datenspeicherschnittstelle nur durch die Verpackungsanlagendatenvermittlung ausgelöst werden, wobei Zugriffe auf die Dateneingabeschnittstelle und/oder die Zugriffsschnittstelle über ein Programmmodul ausgelöst werden. Die Datenspeicherschnittstelle ist vorzugsweise ausschließlich über den Zwischenspeicher ansprechbar, so dass eine konsistente Datenhaltung in der Datenbank sichergestellt ist. Lesende Zugriffe und/oder schreibende Zugriffe auf Zustandsdaten über die Programmmodule erfolgen vorzugsweise über die Dateneingabeschnittstelle und/oder die Zugriffsschnittstelle.

Die Programmmodule untereinander verfügen über keine Möglichkeit der Kommunikation. Die Programmmodule sind transparent zueinander. Eine unmittelbare Kommunikation zwischen zwei Programmmodulen ist unterbunden. Dies stellt sicher, dass jegliche Veränderung an Zustandsdaten über die Datenvermittlung vermittelt wird.

Gemäß einem Ausführungsbeispiel wird vorgeschlagen, dass eine Zugriffsschnittstelle dazu eingerichtet ist, einen eindeutigen Kenner eines Verpackungsanlagendatums von einem Programmmodul zu empfangen. Wie bereits erwähnt, kann ein eindeutiger Kenner ein sogenannter Unique-Identifier sein. Dieses kann sich aus Metadaten eines Zustandsdatums zusammensetzen. Mit Hilfe des eindeutigen Kenners kann das Programmmodul an der Zugriffsschnittstelle sein Interesse an bestimmten Zustandsdaten signalisieren. Verändern sich Daten an dem entsprechenden Zustandsdatum, kann dies durch die Zugriffsschnittstelle detektiert werden und an das Programmmodul signalisiert werden.

Zum Beispiel ist der persistente Speicher eingerichtet zum Kommunizieren einer entsprechenden Speicherbestätigungsbenachrichtigung an die Datenspeicherschnittstelle, wenn der durch die Verpackungsanlagenzustandsdaten repräsentierte zumindest eine erste Zustandswert in dem persistenten Speicher gespeichert wurde. Ferner ist der persistente Speicher eingerichtet zum Kommunizieren einer entsprechenden Speicherfehlerbenachrichtigung an die Datenspeicherschnittstelle, wenn der durch die Verpackungsanlagenzustandsdaten repräsentierten zumindest eine erste Zustandswert nicht in dem persistenten Speicher gespeichert wurde.

Gemäß einer beispielhaften Ausführungsform ist der persistente Speicher eingerichtet zum dauerhaften Speichern von aktuellen und historischen Zustandswerten der Verpackungsanlage. Wie oben offenbart, werden in dem persistenten Speicher beispielsweise historische und aktuelle Zustandswerte für verschiedene Zustände der Verpackungsanlage gespeichert werden.

Gemäß einer beispielhaften Ausführungsform wird die Verpackungsanlagendatenvermittlung durch eine oder mehrere Servervorrichtungen und/oder durch einen oder mehrere virtuelle Server bereitgestellt. Dabei ist eine Verpackungsanlagendatenvermittlung beispielsweise der durch eine Servervorrichtung oder einen virtuellen Server bereitgestellte Teil der Verpackungsanlagendatenvermittlung.

Gemäß einer beispielhaften Ausführungsform repräsentiert der zumindest ein Zustandswert der Verpackungsanlage einen durch einen Sensor der Verpackungsanlage erfassten Messwert.

Zum Beispiel kann der erste Zustandswert den ersten Messwert enthalten und/oder dem ersten Messwert entsprechen. Alternativ oder zusätzlich kann der erste Zustandswert aber beispielsweise auch einen Zählwert und/oder einen Wahrheitswert enthalten. Ein solcher Zählwert kann beispielsweise die Häufigkeit, dass der erste Messwert durch den Sensor erfasst wurde, repräsentieren; ein solcher Wahrheitswert gibt zum Beispiel an, ob der erste Messwert größer als ein Schwellwert und/oder kleiner als ein Schwellwert und/oder gleich einem Schwellwert ist.

Beispiele für Sensoren zum Erfassen des ersten Messwerts sind beispielsweise ein Temperatursensor, ein Lichtschrankensensor, ein Drucksensor, ein Feuchtigkeitssensor, eine Kamera, ein Spannungssensor und/oder ein Füllstandssensor.

Ein Computerprogramm kann Programmanweisungen umfassen, die einen Prozessor zur Ausführung und/oder Steuerung des gegenständlichen Verfahrens veranlassen, wenn das Computerprogramm von dem Prozessor ausgeführt wird. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden.

Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein.

Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger/persistenter oder flüchtiger) Programmspeicher des Prozessors oder ein Teil davon. Das Speichermedium kann beispielsweise ein gegenständliches oder körperliches Speichermedium sein.

Eine beispielhafte, jedoch nicht beanspruchte Servervorrichtung kann zur Ausführung und/oder Steuerung des gegenständlichen Verfahrens eingerichtet sein oder jeweilige Mittel zur Ausführung und/oder Steuerung der Schritte des Verfahrens umfassen. Dabei können entweder alle Schritte des gegenständlichen Verfahrens von den Mitteln gesteuert werden, oder alle Schritte des erfindungsgemäßen Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden.

Ein beispielhaftes, jedoch nicht beanspruchtes Serversystem mit mehreren Servervorrichtungen und/oder mehreren virtuellen Servern kann zur Ausführung und/oder Steuerung des gegenständlichen Verfahrens eingerichtet sein oder jeweilige Mittel zur Ausführung und/oder Steuerung der Schritte des gegenständlichen Verfahrens umfassen. Dabei sind die Servervorrichtungen und/oder die virtuellen Server beispielsweise eingerichtet, gemeinsam das gegenständliche Verfahren auszuführen und/oder zu steuern. Es versteht sich, dass entweder alle Schritte des gegenständlichen Verfahrens von den Mitteln der Servervorrichtungen und/oder der virtuellen Server gesteuert werden, oder alle Schritte des erfindungsgemäßen Verfahrens von den Mitteln der Servervorrichtungen und/oder der virtuellen Server ausgeführt werden, oder ein oder mehrere Schritte von den Mitteln der Servervorrichtungen und/oder der virtuellen Server gesteuert und ein oder mehrere Schritte von den Mitteln der Servervorrichtungen und/oder der virtuellen Server ausgeführt werden. Verschiedene Schritte können optional von verschiedenen Mitteln verschiedener Servervorrichtungen und/oder der virtuellen Server ausgeführt oder gesteuert werden. Die Servervorrichtungen und/oder die virtuellen Server des Serversystems können sich an einem oder an verschiedenen Orten befinden. Die Servervorrichtungen und/oder die virtuellen Server des Serversystems bilden beispielsweise eine Servercloud und/oder ein verteiltes System. Mehrere virtuelle Server können gleichzeitig auf einer Servervorrichtung ausgeführt werden. Dabei soll unter einem virtuellen Server die software- und/oder hardwaremäßige Nachbildung der Hardwarearchitektur einer (physischen) Servervorrichtung durch die bereitstellende Servervorrichtung verstanden werden.

Die Mittel der offenbarten Servervorrichtung(en) können Hardware- und/oder Software-Komponenten umfassen. Die Mittel können beispielsweise mindestens einen Speicher mit Programmanweisungen eines Computerprogramms (z.B. des erfindungsgemäßen Computerprogramms) und mindestens einen Prozessor ausgebildet zum Ausführen von Programmanweisungen aus dem mindestens einen Speicher umfassen. Dementsprechend soll auch zumindest eine Servervorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Servervorrichtung zu veranlassen, das Verfahren gemäß der Erfindung zumindest teilweise (z.B. alleine oder gemeinsam mit mehreren Servervorrichtungen des Serversystems) auszuführen und/oder zu steuern.

Weitere vorteilhafte beispielhafte Ausgestaltungen sind der folgenden detaillierten Beschreibung einiger beispielhafter Ausführungsformen, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil erachtet werden.

Nachfolgend wird der Gegenstand anhand einer Ausführungsbeispiele zeigenden Zeichnung näher erläutert. In der Zeichnung zeigen:
- Fig. 1: eine Verpackungsanlagendatenvermittlung gemäß einem Ausführungsbeispiel;
- Fig. 2a-d: der Betrieb einer Verpackungsanlagendatenvermittlung mit Verpackungseinrichtungen und Datenbanken.

Die in dieser Spezifikation beschriebenen beispielhaften Ausführungsformen und Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen.

In den Patentansprüchen angegebene Bezugszeichen sind nicht als Beschränkungen der eingesetzten Mittel und Schritte anzusehen.

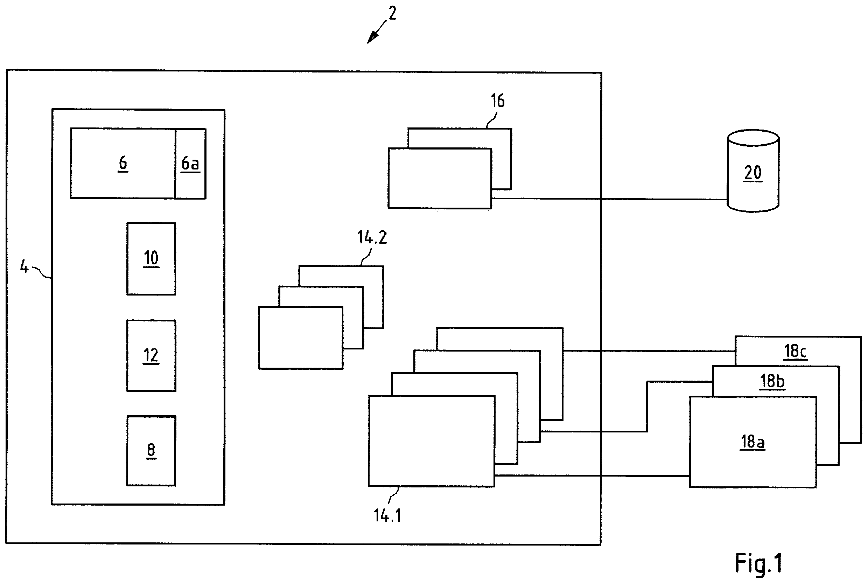

Fig. 1 zeigt eine Verpackungsanlagendatenvermittlung 2. Die Verpackungsanlagendatenvermittlung 2 kann in einer Laufzeitumgebung, einem Server, einem virtuellen Server oder dergleichen ausgeführt werden. Hierbei kann in einem Vermittlungsnetz 4, der Teil der Verpackungsanlagendatenvermittlung 2 sein kann, ein Zwischenspeicher 6, eine Zwischenspeicherschnittstelle 6a, eine Dateneingabeschnittstelle 8, eine Datenspeicherschnittstelle 10 sowie eine Zugriffsschnittstelle 12 implementiert sein.

Die Verpackungsanlagendatenvermittlung 2 verfügt darüber hinaus über eine Umgebung, in der Programmmodule 14.1, 14.2 als auch Datenbankmodule 16 ausgeführt werden können.

Zu erkennen ist, dass die Programmmodule 14.1 als Anlagenprogrammmodule 14.1 konfiguriert sein können und jeweils mit einer Verpackungseinrichtung 18a-c kommunizieren können. Darüber hinaus kann ein Datenbankmodul 16 mit einer Datenbank 20 kommunizieren. Die Programmodule 14.1 können auch als Berechnungsmodule konfiguriert sein, und Verpackungsanlagenparameter aus z.B. Zustandswerten der Verpackungsanlage berechnen und zur Verfügung stellen.

Die Programmmodule 14.1 können individuell auf verschiedenste Verpackungseinrichtungen 18a-c eingerichtet sein. Hierbei kann beispielsweise eine Verpackungseinrichtung 18a eine Abfülleinrichtung sein und von einem ersten Hersteller zur Verfügung gestellt werden, wohingegen eine Verpackungseinrichtung 18b eine Abfülleinrichtung eines zweiten Herstellers sein kann. Eine Verpackungseinrichtung 18c kann beispielsweise ein Tray-Packer sein oder eine sonstige Einrichtung, die innerhalb einer Verpackungsanlage betrieben werden kann und welche Zustandsdaten ausgeben kann. Die Verpackungseinrichtungen 18a-c verfügen jeweils über individuelle Schnittstellen, um ihre Zustandsdaten ausgeben zu können. Die Zustandsdaten sind von den Verpackungseinrichtungen 18a-c in unterschiedlichsten Datenformaten über unterschiedlichste Schnittstellen und in einer unterschiedlichen Art und Weise abrufbar, so dass ein einheitlicher Zugriff hierauf unmöglich ist. Auch können sich an den Schnittstellen der Verpackungseinrichtung 18a-c im Laufe von Weiterentwicklungen Veränderungen ergeben, die abgebildet werden müssen.

Hierzu sind die Programmmodule 14.1 vorgesehen. Jedes Programmmodul 14.1 kann für eine einzige Verpackungseinrichtung 18a-c individuell angepasst sein. Somit kann mit einem Programmmodul 14.1 individuell auf eine Maschinenschnittstelle einer jeweiligen Verpackungseinrichtung 18a-c zugegriffen werden und die Zustandsdaten ausgelesen werden.

Über ein definiertes Datenmodel können die Programmmodule 14.1 die von den Verpackungseinrichtungen 18a-c erhaltenen Zustandsdaten als Verpackungsanlagenzustandsdaten ausgeben. Hierbei können sowohl Metadaten als auch Zustandswerte in einem einheitlichen Datenformat zur Verfügung gestellt werden. Das Datenformat kann hierbei Variablen, Maschinen oder Linien definieren. Je nach Datenformat können die Zustandsdaten Metadaten und Zustandswerte enthalten. Metadaten können beispielsweise ein Name, eine Herkunft, ein Ziel, ein Ursprung, Synonyme oder Tags enthalten. Hierüber lassen sich in einer einheitlichen Datenstruktur die verschiedenen Zustandsdaten beschreiben.

Mit Hilfe von Variablen lassen sich Datenpunkte, insbesondere Zustandswerte von verschiedenen Sensoren, abbilden. Mit Hilfe von Maschinen lassen sich Eigenschaften von Maschinen abbilden und mit Hilfe von Linien lassen Verknüpfungen von Maschinen und das Layout der Verpackungsanlage definieren.

Die einheitlich formatierten Zustandsdaten können von den Verpackungseinrichtungen 18a-c über die Programmmodule 14.1 und die Dateneingabeschnittstelle 8 in das Vermittlungsnetz 4 eingespeist werden.

Der Zwischenspeicher 6 kann zumindest Metadaten der Zustandsdaten speichern, verfügt jedoch vorzugsweise auch über einen ausreichenden Speicher, um zumindest die aktuellen Zustandswerte von Zustandsdaten zu speichern. Für ein persistentes Speichern kann eine Auslagerung der Zustandsdaten in eine Datenbank 20 sinnvoll sein.

Ähnlich wie bei den Verpackungseinrichtungen 18a-c existieren unterschiedlichste Datenbanken 20 mit den unterschiedlichsten Datenbankprotokollen und Zugriffsschnittstellen. Um auch hier eine möglichst hohe Flexibilität für die Verpackungsanlagendatenvermittlung 2 bzw. einen Systemintegrator zur Verfügung zu stellen, können Datenbankmodule 16 vorgesehen sein, die für eine jeweilige Datenbank 20 individualisiert sind. Es versteht sich, dass sowohl die Programmmodule 14.1 als auch die Datenbankmodule 16 jeweils nur für die in der Verpackungsanlage vorhandenen Verpackungseinrichtungen 18a-c respektive Datenbanken 20 zur Verfügung gestellt werden müssen. Eine Individualisierung kann auf Grundlage der in der Verpackungsanlage vorhandenen Einrichtungen, Komponenten und Anwendungen erfolgen, so dass die Programmmodule 14.1 und Datenbankmodule 16 nur das Verfügbare unterstützen müssen.

Neben den Datenbankmodulen 16 und den Programmmodulen 14.1 können weitere Programmmodule 14.2 vorgesehen sein, mit denen beispielsweise aus Zustandswerten Informationen über die Verpackungsanlage berechnet werden können. Solche Anwendungen können auch als Programmmodule 14.2 in der Verpackungsanlagendatenvermittlung 2 vorgesehen sein.

Die Daten, mit welcher die Programmmodule 14.1, 14.2, 16 mit den Schnittstellen 8, 10, 12 und dem Zwischenspeicher 6 kommunizieren, können beispielsweise dem OMAC PackML Standard oder dem Weihenstephan Standard genügen.

Die Programmmodule und/oder die Verpackungsanlagendatenvermittlung können eine Implementierung einer Dateneingangsschnittstelle zur Verfügung stellen. Insbesondere kann die Verpackungsanlagendatenvermittlung Dateneingangsschnittstellen als Funktionen, Methoden und/oder Klassen zur Verfügung stellen. Hierbei kann es möglich sein, dass eine Instanz eines Programmmoduls eine Dateneingangsschnittstelle zur Kommunikation nutzt.

Innerhalb des Vermittlungsnetzes 4 können verschiedene Zusatzfunktionen zur Verfügung gestellt werden. So kann beispielsweise eine Sicherheitsfunktion zur Verfügung gestellt werden. Mit dieser können Schreib-/Leserechte auf verschiedene Zustandsdaten überwacht werden. Dabei kann überwacht werden, welche der Schnittstellen 8-12 auf Zustandsdaten zugreifen kann. Auch kann überwacht werden, welche der Programmmodule 14.1, 14.2 auf Daten zugreifen können. Ferner ist ein Nutzermanagement vorhanden, mit dem Zugriffsrechte Nutzern zugeordnet werden können und Nutzer sich an- bzw. abmelden können. Darüber hinaus kann eine Logbuchfunktion vorgesehen sein, mit der Aktionen innerhalb des Vermittlungsnetzes 4 geloggt werden können. Daneben können Standardfunktionalitäten vorgesehen sein, wie das Behandeln von Ausnahmen, das Laden von Programmmodulen, das Debuggen oder dergleichen.

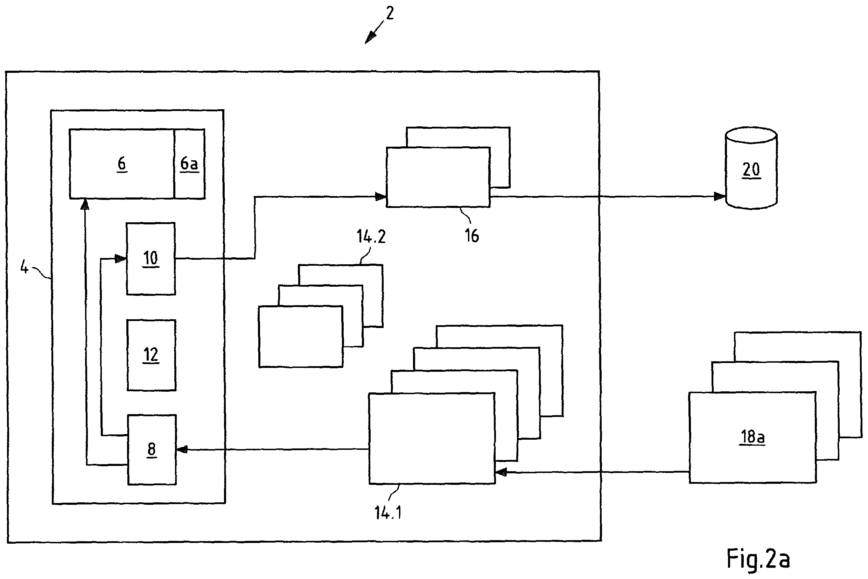

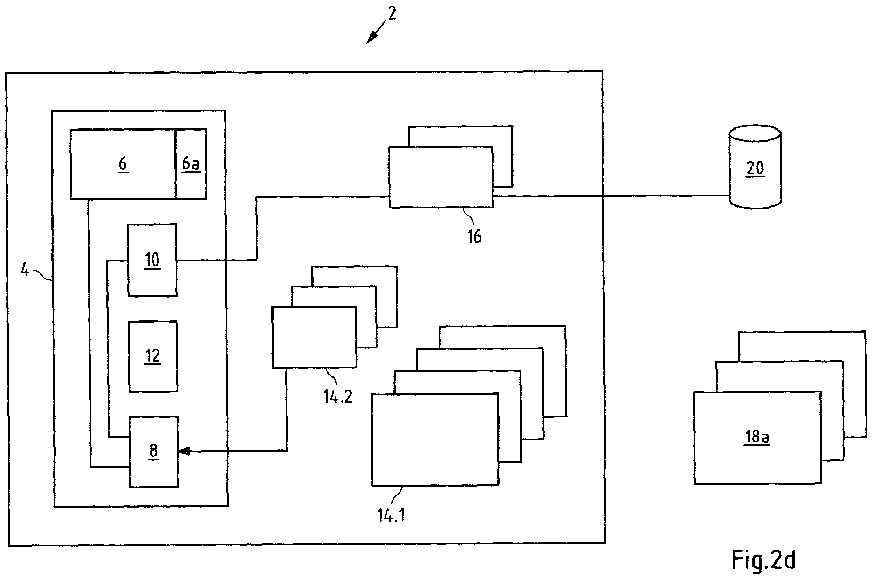

Fig. 2a-d zeigen, wie Verpackungsanlagenzustandsdaten in der Anlagendatenvermittlung 2 verarbeitet werden.

Nachdem Programmmodule 14.1 und Datenbankmodule 16.1 implementiert und/oder instanziiert wurden und sich an dem Vermittlungsnetz 4 angemeldet haben, haben diese Zugriff zumindest auf die Dateneingabeschnittstelle 8, die Zugriffsschnittstelle 12 sowie die Datenspeicherschnittstelle 10 und/oder ggf. den Zwischenspeicher 6 bzw. die Zwischenspeicherschnittstelle 6a. Das Datenbankmodul 16.1 hat vorzugsweise über die Datenspeicherschnittstelle 10 Zugriff auf den Zwischenspeicher 6. Die Programmodule haben vorzugsweise über die Zwischenspeicherschnittstelle 6a Zugriff auf den Zwischenspeicher, insbesondere einen Lesezugriff.

Ändert sich ein Maschinenparameter an einer Verpackungseinrichtung 18a, kann dies durch einen entsprechenden Sensor registriert werden. Die Verpackungsmaschine 18a gibt den geänderten Maschinenparameter, wie in Fig. 2a gezeigt, als Zustandswert an ihrer ggf. proprietären Maschinenschnittstelle aus.

Das Programmmodul 14.1 ist dazu eingerichtet, mit der Verpackungseinrichtung 18a zusammenzuarbeiten. Hierzu kennt das Programmmodul 14.1 die Maschinenschnittstelle der Verpackungseinrichtung 18a und kann die dort auflaufenden Informationen interpretieren.

Das Programmmodul 14.1 setzt die erhaltenen Daten in ein Datenformat für die Verpackungsanlagendatenvermittlung 2 um. In diesem Datenformat sind die Daten vorzugsweise nach dem OMAC PackML-Standard umfassend Metadaten und Zustandswerten. Die so verarbeiteten Daten werden von dem Programmmodul 14.1 an die Dateneingabeschnittstelle 8 kommuniziert.

Über die Dateneingabeschnittstelle 8 wird dem Programmmodul 14.1 signalisiert, dass die Daten empfangen wurden. Darüber hinaus wird von der Dateneingabeschnittstelle 8 eine Information an den Zwischenspeicher 6 übermittelt. In dem Zwischenspeicher 6 wird überprüft, ob zu diesem Zustandsdatum bereits Informationen hinterlegt sind oder nicht. Sind die Zustandsdaten neu, werden sie in dem Zwischenspeicher 6 erstmalig abgelegt, sind die Zustandsdaten nur Wertänderungen von bekannten Zustandsdaten, werden diese Wertänderungen in dem Zwischenspeicher 6 hinterlegt.

Außerdem erfolgt über die Datenspeicherschnittstelle 10 ein Abspeichern in der Datenbank 20. Hierzu werden die Metadaten als auch die Zustandswerte von der Datenspeicherschnittstelle 10 in einer einheitlichen Datenstruktur an das Datenbankmodul 16 übergeben.

Das Datenbankmodul 16 ist eingerichtet, um mit einer bestimmten Datenbank 20 zu kommunizieren und übergibt die entsprechenden Daten in dem für die Datenbank 20 geeigneten Format an die Datenbank 20. Somit sind die veränderten Daten von der Verpackungseinrichtung 18a in der Datenbank 20 persistiert und außerdem in dem Zwischenspeicher 6 zum Abrufen bereitgehalten.

Zu erkennen ist, dass für das Ablegen der Daten keine unmittelbare Kommunikation zwischen dem Datenbankmodul 16 und dem Programmmodul 14.1 notwendig ist. Ferner ist zu erkennen, dass ausschließlich über die Schnittstellen 8-12 kommuniziert wird. Die Dateneingabeschnittstelle 8 wird durch das Programmmodul 14.1 getriggert, wohingegen die Datenspeicherschnittstelle 10 durch das Vermittlungsnetz 4 getriggert wird.

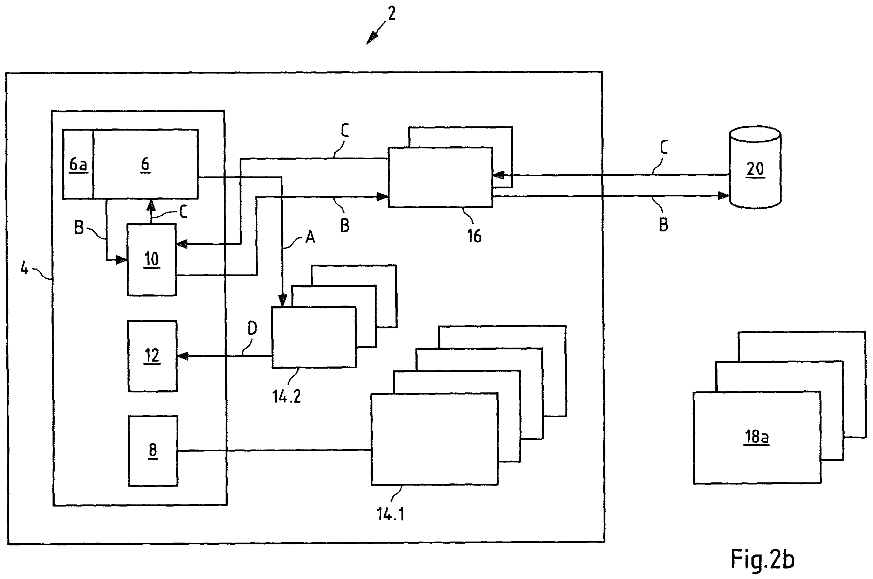

Fig. 2b zeigt ein Beispiel, wie ein Programmmodul 14.2, welches beispielsweise Maschinenparameter auswertet, Informationen zu den Verpackungsanlagendaten erhalten kann. Ein Programmmodul 14.2 kann in einem Schritt A zunächst über die Zwischenspeicherschnittstelle 6a des Zwischenspeichers 6 Informationen zu verfügbaren Verpackungsanlagendaten abfragen. Hierbei können entsprechende Filterkriterien von dem Programmmodul 14.2 vorgegeben sein. Die Abfrage kann vorzugsweise anhand von Metadaten erfolgen. Hierbei wird ebenfalls das Datenformat verwendet, welches in der Verpackungsanlagendatenvermittlung 2 eingesetzt wird.

In dem Zwischenspeicher 6 kann eine solche Anfrage zunächst intern verarbeitet werden. Hierbei kann in dem Zwischenspeicher 6 überprüft werden, ob entsprechende Daten, die zu der Anfrage passen, in dem Zwischenspeicher 6 vorhanden sind. Diese interne Suche kann einerseits lediglich eine Suche nach Metadaten enthalten oder zusätzlich auch Zustandswerte abrufen.

Darüber hinaus kann in Schritt B der Zwischenspeicher 6 über die Datenspeicherschnittstelle 10 in der Datenbank 20 das Vorhandensein von Zustandswerten überprüfen, die auf den von dem Programmmodul 14.2 im Schritt A gesetzten Filter passen. Entsprechende Daten können dann in Schritt C von der Datenbank 20 an den Zwischenspeicher 6 übergeben werden.

Vorzugsweise empfängt das Programmmodul 14.2 Informationen, insbesondere Metadaten zu den verfügbaren Zustandsdaten, die der Suchanfrage entsprechen, von der Zwischenspeicherschnittstelle 6a. In dem Programmmodul 14.2 kann dann ein entsprechendes Zustandsdatum ausgewählt werden und über die Zugriffsschnittstelle 12 kann ein Abonnement auf dieses Zustandsdatum in Schritt D gesetzt werden. Hierzu teilt das Programmmodul 14.2 die Metadaten, insbesondere einen Unique-Identifier des zu überwachenden Datums an die Zugriffsschnittstelle 10 mit. Mit Hilfe des in Fig. 2b beschriebenen Verfahrens kann ein jedes Programmmodul 14.2 also auch ein Programmmodul 14.1 verfügbare Zustandsdaten abrufen und über die Verwendung eines Unique-Kriteriums, welches Zustandsdaten eindeutig identifiziert, an der Zugriffsschnittstelle 10 das Interesse an diesen Daten begründen.

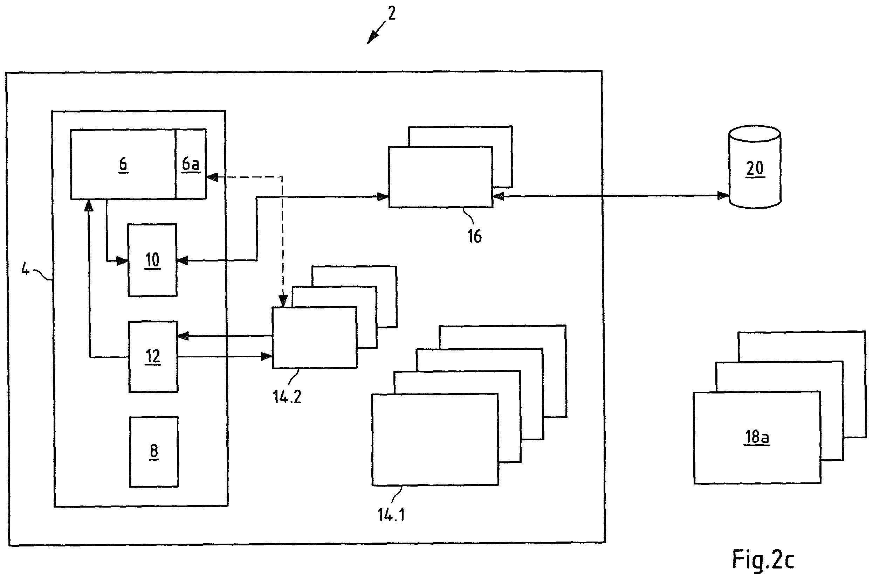

Fig. 2c zeigt einen Datenlauf, wenn ein Zustandsdatum entsprechend dem Ablauf in Fig. 2a geändert wurde und ein Programmmodul 14.2 die entsprechenden Zustandsdaten an der Zugriffsschnittstelle 12 abonniert hat.

Nachdem in dem Verfahren gemäß Fig. 2a ein Zustandswert in der Datenbank 20 abgelegt wurde, erfolgt eine Signalisierung durch die Zugriffsschnittstelle 12, dass ein entsprechendes Datum geändert wurde. Diese Signalisierung durch die Zugriffsschnittstelle 12 erfolgt gegenüber jedem Programmmodul 14.1, 14.2, welches das Interesse (Abonnement) an dem Zustandsdatum gegenüber der Zugriffsschnittstelle 12 angemeldet hat.

Die Zugriffsschnittstelle 12 triggert somit alle Programmmodule 14.1, 14.2, die ein Interesse an einem bestimmten Zustandsdatum haben.

Erkennt das Programmmodul 14.2, dass sich das Zustandsdatum geändert hat, können Zustandswerte abgerufen werden. Hierzu sind zwei verschiedene Optionen möglich.

Einerseits ist es möglich, dass das Programmmodul 14.2 nach einer Signalisierung eines geänderten Wertes über die Zugriffsschnittelle 12 Zustandswerte von dem entsprechenden Datum abruft. Anschließend wird von der Zugriffsschnittstelle 12 aus dem Zwischenspeicher 6 die aktuellen Zustandswerte geladen und über die Zugriffsschnittstelle 12 an das Programmmodul 14.2 mitgeteilt.

Hierbei ist es denkbar, dass wenn in dem Zwischenspeicher 6 nur ein aktueller Wert vorhanden ist, der Zwischenspeicher 6 über die Datenspeicherschnittstelle 10 aus der Datenbank 20 unter Verwendung des Datenbankmoduls 16 auch historische Zustandswerte lädt und über die Zugriffsschnittstelle 12 dem Programmmodul 14.2 mitteilt.

## Patentansprüche

1. Verpackungsanlage mit einer Verpackungsanlagendatenvermittlung (2) umfassend,
- zumindest einen Zwischenspeicher (6) für Zustandswerte umfassende Verpackungsanlagenzustandsdaten,
- zumindest eine Dateneingangsschnittstelle,
- wobei die Verpackungsanlagendatenvermittlung (2) zur Kommunikation über die Dateneingangsschnittstelle mit zumindest einem an eine Verpackungseinrichtung (18) der Verpackungsanlage angepassten Programmmodul (14.1, 14.2) eingerichtet ist und zum Erhalten von zumindest Verpackungsanlagenzustandsdaten eingerichtet ist, wobei die Dateneingangsschnittstelle für den Empfang von Verpackungsanlagenzustandsdaten eingerichtet ist,
- zumindest eine Datenspeicherschnittelle (10),
- wobei die Verpackungsanlagendatenvermittlung (2) zur Kommunikation über die Datenspeicherschnittstelle (10) mit zumindest einem an eine Datenbank (20) angepassten Datenbankmodul (16) eingerichtet ist
**dadurch gekennzeichnet,**
- **dass** die Verpackungsanlagendatenvermittlung eine Zugriffsschnittstelle (12) umfasst, wobei diese Zugriffsschnittstelle (12) zur Kommunikation mit dem zumindest einen Programmmodul (14.1, 14.2) eingerichtet ist,
- **dass** die Zugriffschnittstelle für den Zugriff auf die Verpackungsanlagenzustandsdaten eingerichtet ist, und
- **dass** das zumindest eine Programmmodul (14.1, 14.2) an der Zugriffsschnittstelle (12) via Abonnement für ein bestimmtes Zustandsdatum angemeldet ist, sodass das abonnierende zumindest eine Programmmodul (14.1, 14.2) über die Zugriffsschnittstelle (12) über eine Änderung dieses Zustandsdatums informiert wird.

2. Verpackungsanlage mit einer Verpackungsanlagendatenvermittlung (2) nach Anspruch 1,
**dadurch gekennzeichnet,**
- **dass** der Zwischenspeicher (6), die Dateneingangsschnittstelle, die Datenspeicherschnittstelle (10) und vorzugsweise eine Zugriffsschnittstelle (12) ein gemeinsames Vermittlungsnetz (4) bilden und dass Programmmodule (14.1, 14.2) ausschließlich über das Vermittlungsnetz (4) Verpackungsanlagenzustandsdaten mit der Verpackungsanlagendatenvermittlung austauschen.

3. Verpackungsanlage mit einer Verpackungsanlagendatenvermittlung (2) nach einem der vorangehenden Ansprüche,
**dadurch gekennzeichnet,**
- **dass** der Zwischenspeicher (6), die Dateneingangsschnittstelle, die Datenspeicherschnittstelle (10) und vorzugsweise eine Zugriffsschnittstelle (12) autark voneinander betrieben sind und/oder dass der Zwischenspeicher (6), die Dateneingangsschnittstelle und die Datenspeicherschnittsteller (10) über einen gemeinsamen, vorzugsweise in der Verpackungsanlagendatenvermittlung (2) integrierten Nachrichtenbus miteinander verbunden sind.

4. Verpackungsanlage mit einer Verpackungsanlagendatenvermittlung (2) nach einem der vorangehenden Ansprüche,
**dadurch gekennzeichnet,**
- **dass** die Dateneingangsschnittstelle zur Kommunikation mit zumindest einem Verpackungsanlagenparameter bestimmenden Programmmodul (14.1, 14.2) eingerichtet ist und/oder dass eine Instanz eines Programmmoduls (14.1, 14.2) jeweils eine Dateneingangsschnittstelle implementiert und/oder dass die Verpackungsanlagendatenvermittlung (2) eine Dateneingangsschnittstelle implementiert.

5. Verpackungsanlage mit einer Verpackungsanlagendatenvermittlung (2) nach einem der vorangehenden Ansprüche,
**dadurch gekennzeichnet,**
- **dass** der Zwischenspeicher (6) zum Austausch von Verpackungsanlagenzustandsdaten umfassend Metadaten und Zustandswerte über die Datenspeicherschnittstelle (10) gebildet ist, und/oder
- **dass** der Zwischenspeicher (6) eine Zwischenspeicherschnittstelle (6a), insbesondere eine Leseschnittstelle aufweist, wobei die Zwischenspeicherschnittstelle (6a) für zumindest einen unmittelbaren Lesezugriff und/oder Schreibzugriff auf zumindest Metadaten in dem Zwischenspeicher (6) durch zumindest ein Programmmodul (14.1, 14.2) eingerichtet ist.

6. Verpackungsanlage mit einer Verpackungsanlagendatenvermittlung (2) nach einem der vorangehenden Ansprüche,
**dadurch gekennzeichnet,**
- **dass** die Zugriffschnittstelle bei einer Datenänderungen in der Verpackungsanlagendatenvermittlung (2), insbesondere dem Zwischenspeicher (6) zumindest eine Änderungsnachricht ausgibt, insbesondere eine Änderungsnachricht an ein Programmmodul (14.1, 14.2) ausgibt.

7. Verpackungsanlage mit einer Verpackungsanlagendatenvermittlung (2) nach einem der vorangehenden Ansprüche,
**dadurch gekennzeichnet,**
- **dass** Programmmodule (14.1, 14.2) unmittelbar auf den Zwischenspeicher (6) zum Abfragen einer Verfügbarkeit von Verpackungsanlagenzustandsdaten zugreifen, wobei Programmmodule (14.1, 14.2) auf Zustandswerte und/oder Metadaten der Verpackungsanlagenzustandsdaten über die Zwischenspeicherschnittstelle (6a) und/oder vorzugsweise eine Zugriffsschnittstelle (12) zugreifen.

8. Verpackungsanlage mit einer Verpackungsanlagendatenvermittlung (2) nach einem der vorangehenden Ansprüche,
**dadurch gekennzeichnet,**
- **dass** der Zwischenspeicher (6) bei einer Abfrage einer Verfügbarkeit von Verpackungsanlagenzustandsdaten zunächst intern nach Verpackungsanlagenzustandsdaten und bei einem negativen Suchergebnis anschließend über die Datenspeicherschnittstelle (10) in der Datenbank (20) nach Verpackungsanlagenzustandsdaten sucht.

9. Verpackungsanlage mit einer Verpackungsanlagendatenvermittlung (2) nach einem der vorangehenden Ansprüche,
**dadurch gekennzeichnet,**
- **dass** Zugriffe auf die Datenspeicherschnittstelle (10) nur durch die Verpackungsanlagendatenvermittlung (2) ausgelöst werden, und/oder dass Zugriffe auf die Dateneingabeschnittstelle (8) und/oder die Zugriffschnittstelle über ein Programmmodul (14.1, 14.2) ausgelöst werden.

10. Verpackungsanlage mit einer Verpackungsanlagendatenvermittlung (2) nach einem der vorangehenden Ansprüche,
**dadurch gekennzeichnet,**
- **dass** zwischen zumindest zwei der Programmmodule (14.1, 14.2) eine unmittelbare Kommunikation unterbunden ist und/oder dass zumindest zwei der Programmmodule (14.1, 14.2) zueinander anonym sind.

11. Verpackungsanlage mit einer Verpackungsanlagendatenvermittlung (2) nach einem der vorangehenden Ansprüche,
**dadurch gekennzeichnet,**
- **dass** die eine Zugriffsschnittstelle (12) dazu eingerichtet ist, einen eindeutigen Kenner eines Verpackungsanlagenzustandsdatums von einem Programmmodul (14.1, 14.2) zu empfangen und Datenänderungen von den eindeutigen Kenner aufweisenden Verpackungsanlagenzustandsdaten an das Programmmodul (14.1, 14.2) signalisiert.

12. Verpackungsanlage mit einer Verpackungsanlagendatenvermittlung (2) nach einem der vorangehenden Ansprüche,
**dadurch gekennzeichnet,**
- **dass** zumindest ein erster Zustandswert der Verpackungsanlage einen durch einen Sensor der Verpackungsanlage erfassten ersten Messwert repräsentiert.

13. Verfahren zum Betrieb einer Verpackungsanlage, umfassend:
- Erhalten von ersten Verpackungsanlagenzustandsdaten über eine Dateneingangsschnittstelle einer Verpackungsanlagendatenvermittlung (2), wobei die ersten Verpackungsanlagenzustandsdaten zumindest einen ersten Zustandswert einer Verpackungsanlage repräsentieren;
- Speichern und/oder Bewirken des Speicherns des durch die ersten Verpackungsanlagenzustandsdaten repräsentierten zumindest einen ersten Zustandswerts in einer Datenbank (20) durch eine Datenspeicherschnittstelle (10) der Verpackungsanlagendatenvermittlung;
- wobei zumindest ein an eine Verpackungseinrichtung (18) der Verpackungsanlage angepasstes Programmmodul (14.1, 14.2) über die Dateneingangsschnittstelle kommuniziert, und
- die Datenspeicherschnittstelle (10) mit zumindest einem an die Datenbank (20) angepassten Datenbankmodul (16) kommuniziert,
**dadurch gekennzeichnet,**
- **dass** eine Zugriffsschnittstelle (12) mit dem zumindest einen Programmmodul (14.1) kommuniziert, und
- ein Zugriff auf die Verpackungsanlagenzustandsdaten über die Zugriffschnittstelle erfolgt und
- **dass** das zumindest eine Programmmodul (14.1, 14.2) an der Zugriffsschnittstelle (12) via Abonnement für ein bestimmtes Zustandsdatum angemeldet sind, sodass das abonnierende zumindest eine Programmmodul (14.1, 14.2) über die Zugriffsschnittstelle (12) über eine Änderung dieses Zustandsdatums informiert wird.

14. Verfahren nach Anspruch 13 ferner umfassen:
- Erfassen zumindest des ersten Messwerts durch einen Sensor der Verpackungsanlage; und
- Kommunizieren und/oder Bewirken des Kommunizierens der Verpackungsanlagenzustandsdaten an die Dateneingangsschnittstelle über ein Programmmodul (14.1, 14.2).

## Claims

1. Packaging plant with a packaging plant data exchange (2) comprising,
- at least one buffer (6) for packaging plant status data comprising status values,
- at least one data input interface, wherein
- the packaging plant data exchange (2) is arranged for communicating via the data input interface with at least one program module (14.1, 14.2) adapted to a packaging device (18) of the packaging plant and for receiving at least packaging plant status data, wherein the data input interface is arranged for receiving packaging plant status data,
- at least one data storage interface (10), wherein
- the packaging plant data exchange (2) is arranged for communicating via the data storage interface (019 with at least one database module (16) adapted to a database (10),
**characterized in that**
- the packaging plant data exchange comprises an access interface (12), wherein this access interface (12) is arranged for communication with at least one program module (14.1, 14.2)
- the access interface is arranged for accessing the packaging plant status data and
- the at least one program module (14.1, 14.2) is registered at the access interface via a subscription for a certain status data, such that the subscribing program module (14.1, 14.2) is informed about a change in the status data via the access interface.

2. Packaging plant with a packaging plant data exchange (2) according to claim 1, **characterized in that**
- the buffer (6), the data input interface, the data storage interface (10) and preferably an access interface (12) form a common switching network, and **in that** the program module (14.1, 14.2) exchanges packaging plant status data with the packaging plant data exchange exclusively via the switching network.

3. Packaging plant with a packaging plant data exchange (2) according to one of the preceding claims,
**characterized in that**
- the buffer (6), the data input interface, the data storage interface (10) and preferably an access interface (12) are operated independently of one another and/or **in that** the buffer (6), the data input interface and the data storage interface (10) are connected to one another via a common message bus which is preferably integrated in the packaging plant data exchange system.

4. Packaging plant with a packaging plant data exchange (2) according to one of the preceding claims,
**characterized in that**
- the data input interface is set up for communication with at least one program module (14.1, 14.2) which determines packaging plant parameters and/or **in that** an instance of a program module (14.1, 14.2) respectively implements a data input interface and/or **in that** the packaging plant data exchange implements a data input interface.

5. Packaging plant with a packaging plant data exchange (2) according to one of the preceding claims,
**characterized in that**
- the buffer (6) is arranged for exchanging packaging plant status data comprising metadata and status values via the data storage interface and/or
- the buffer (6) has a buffer interface (6a), in particular a read interface, wherein the buffer interface (6a) is arranged for at least a direct read access and/or write access to at least metadata in the buffer (6) by at least one program module (14.1, 14.2).

6. Packaging plant with a packaging plant data exchange (2) according to one of the preceding claims,
**characterized in that**
- the access interface outputs at least one change message, in particular a change message to a program module (14.1, 14.2), in the event of data changes in the packaging plant data exchange (2), in particular the buffer.

7. Packaging plant with a packaging plant data exchange (2) according to one of the preceding claims,
**characterized in that**
- program modules (14.1, 14.2) directly access the buffer (6) for querying the availability of packaging plant status data, wherein program modules (14.1, 14.2) access status values and/or metadata of the packaging plant status data via the buffer interface (6a) and/or preferably an access interface (12).

8. Packaging plant with a packaging plant data exchange (2) according to one of the preceding claims,
**characterized in that**
- when an availability of packaging plant status data is queried, the buffer (6) first searches internally for packaging plant status data and, if the search result is negative, then searches in the database (20) via the data storage interface (10) for packaging plant status data.

9. Packaging plant with a packaging plant data exchange (2) according to one of the preceding claims,
**characterized in that**
- accesses to the data storage interface (10) are triggered only by the packaging plant data exchange (2) and/or **in that** accesses to the data input interface (8) and/or the access interface are triggered via a program module (14.1, 14.2).

10. Packaging plant with a packaging plant data exchange (2) according to one of the preceding claims,
**characterized in that**
- direct communication is prevented between at least two of the program modules (14.1, 14.2) and/or **in that** at least two of the program modules (14.1, 14.2) are anonymous to one another.

11. Packaging plant with a packaging plant data exchange (2) according to one of the preceding claims,
**characterized in that**
- an the access interface (12) is arranged to receive a unique identifier of a packaging plant status date from a program module (14.1, 14.2) and to signal data changes from packaging plant status data having the unique identifier to the program module (14.1, 14.2).

12. Packaging plant with a packaging plant data exchange (2) according to one of the preceding claims,
**characterized in that**
- the at least one first status value of the packaging plant represents a first measured value ontained by a sensor of the packaging plant.

13. Method for operating a Packaging plant with comprising:
- receiving first packaging plant status data via a data input interface of a packaging plant data exchange, wherein the first packaging plant status data represent at least one first status value of a packaging plant;
- storing and/or effecting storage of the at least one first status value represented by the first packaging plant status data in a database (20) by a data storage interface (10) of the packaging plant data exchange; wherein
- at least one program module (14.1, 14.2) adapted to a packaging device (18) of the packaging plant communicates via the data input interface, and
- the data storage interface (10) communicates with at least one database module (16) adapted to the database (20),
**characterized in that**
- an access interface (12) communicates with the at least one program module (14.1),
- an access to the packaging plant status data is carried out via the access interface and
- the at least one program module (14.1, 14.2) is registered at the access interface via a subscription for a certain status data, such that the subscribing program module (14.1, 14.2) is informed about a change in the status data via the access interface.

14. Method according to claim 13 further comprising:
- obtaining at least the first measured value by a sensor of the packaging plant; and
- communicating and/or effecting the communication of packaging plant status data to the data input interface via a program module (14.1, 14.2).

## Revendications

1. Installation d'emballage avec un commutateur de données d'installation d'emballage (2) comprenant,
- au moins une mémoire intermédiaire (6) pour des données d'état d'installation d'emballage comprenant des valeurs d'état,
- au moins une interface d'entrée de données,
- le commutateur de données d'installation d'emballage (2) étant conçu pour communiquer par l'intermédiaire de l'interface d'entrée de données avec au moins un module de programme (14.1, 14.2) adapté à un dispositif d'emballage (18) de l'installation d'emballage et étant conçu pour recevoir au moins des données d'état d'installation d'emballage, l'interface d'entrée de données étant conçue pour la réception de données d'état d'installation d'emballage,
- au moins une interface de stockage de données (10),
- le commutateur de données d'installation d'emballage (2) étant conçu pour communiquer, via l'interface de stockage de données (10), avec au moins un module de base de données (16) adapté à une base de données (20).
**caractérisée**
- **en ce que** le commutateur de données d'installation d'emballage comprend une interface d'accès (12), cette interface d'accès (12) étant conçue pour la communication avec l'au moins un module de programme (14.1, 14.2),
- **en ce que** l'interface d'accès est conçue pour l'accès aux données d'état de l'installation d'emballage, et
- **en ce que** l'au moins un module de programme (14.1, 14.2) est abonné à l'interface d'accès (12) via un abonnement pour une donnée d'état déterminée, de sorte que l'au moins un module de programme (14.1, 14.2) qui s'abonne est informé d'une modification de cette donnée d'état via l'interface d'accès (12).

2. Installation d'emballage avec un commutateur de données d'installation d'emballage (2) selon la revendication 1,
**caractérisée**
- **en ce que** la mémoire intermédiaire (6), l'interface d'entrée de données, l'interface de stockage de données (10) et de préférence une interface d'accès (12) forment un réseau de commutation commun (4) et que des modules de programme (14.1, 14.2) échangent des données d'état d'installation d'emballage avec le commutateur de données d'installation d'emballage exclusivement par le biais du réseau de commutation (4).

3. Installation d'emballage avec un commutateur de données d'installation d'emballage (2) selon l'une des revendications précédentes,
**caractérisée**
- **en ce que** la mémoire intermédiaire (6), l'interface d'entrée de données, l'interface de stockage de données (10) et de préférence une interface d'accès (12) fonctionnent de manière autonome les unes par rapport aux autres et/ou que la mémoire intermédiaire (6), l'interface d'entrée de données et l'interface de stockage de données (10) sont reliées entre elles par un bus de messages commun, de préférence intégré dans le commutateur de données d'installation d'emballage (2).

4. Installation d'emballage avec un commutateur de données d'installation d'emballage (2) selon l'une des revendications précédentes,
**caractérisée**
- **en ce que** l'interface d'entrée de données est conçue pour communiquer avec au moins un module de programme (14.1, 14.2) déterminant des paramètres d'installation d'emballage et/ou
- **en ce qu'**une instance d'un module de programme (14.1, 14.2) met en œuvre respectivement une interface d'entrée de données et/ou
- **en ce que** le commutateur de données d'installation d'emballage (2) met en œuvre une interface d'entrée de données.

5. Installation d'emballage avec un commutateur de données d'installation d'emballage (2) selon l'une des revendications précédentes,
**caractérisée**
- **en ce que** la mémoire intermédiaire (6) est conçue pour l'échange de données d'état d'installation d'emballage comprenant des métadonnées et des valeurs d'état via l'interface de stockage de données (10), et/ou
- **en ce que** la mémoire intermédiaire (6) présente une interface de mémoire intermédiaire (6a), en particulier une interface de lecture, l'interface de mémoire intermédiaire (6a) étant conçue pour au moins un accès direct en lecture et/ou en écriture à au moins des métadonnées dans la mémoire intermédiaire (6) par au moins un module de programme (14.1, 14.2).

6. Installation d'emballage avec un commutateur de données d'installation d'emballage (2) selon l'une des revendications précédentes,
**caractérisée**
- **en ce que** l'interface d'accès émet au moins un message de modification lors d'une modification de données dans le commutateur de données d'installation d'emballage (2), en particulier dans la mémoire intermédiaire (6), en particulier émet un message de modification à un module de programme (14.1, 14.2).

7. Installation d'emballage avec un commutateur de données d'installation d'emballage (2) selon l'une des revendications précédentes,
**caractérisée**
- **en ce que** des modules de programme (14.1, 14.2) accèdent directement à la mémoire intermédiaire (6) pour interroger une disponibilité de données d'état d'installation d'emballage, des modules de programme (14.1, 14.2) accédant à des valeurs d'état et/ou à des métadonnées des données d'état d'installation d'emballage via l'interface de mémoire intermédiaire (6a) et/ou de préférence une interface d'accès (12).

8. Installation d'emballage avec un commutateur de données d'installation d'emballage (2) selon l'une des revendications précédentes,
**caractérisée**
- **en ce que** la mémoire intermédiaire (6), lors d'une interrogation d'une disponibilité de données d'état d'installation d'emballage, recherche d'abord en interne des données d'état d'installation d'emballage et, en cas de résultat de recherche négatif, recherche ensuite des données d'état d'installation d'emballage dans la base de données (20) via l'interface de stockage de données (10).

9. Installation d'emballage avec un commutateur de données d'installation d'emballage (2) selon l'une des revendications précédentes,
**caractérisée**
- **en ce que** des accès à l'interface de stockage de données (10) ne sont déclenchés que par le commutateur de données d'installation d'emballage (2), et/ou
- **en ce que** des accès à l'interface d'entrée de données (8) et/ou à l'interface d'accès sont déclenchés par un module de programme (14.1, 14.2).

10. Installation d'emballage avec un commutateur de données d'installation d'emballage (2) selon l'une des revendications précédentes,
**caractérisée**
- **en ce qu'**une communication directe est empêchée entre au moins deux des modules de programme (14.1, 14.2) et/ou
- **en ce qu'**au moins deux des modules de programme (14.1, 14.2) sont anonymes l'un par rapport à l'autre.

11. Installation d'emballage avec un commutateur de données d'installation d'emballage (2) selon l'une des revendications précédentes,
**caractérisée**
- **en ce que** l'interface d'accès (12) est conçue pour recevoir un identificateur unique d'une donnée d'état d'installation d'emballage d'un module de programme (14.1, 14.2) et signale au module de programme (14.1, 14.2) des modifications de données d'état d'installation d'emballage présentant l'identificateur unique.

12. Installation d'emballage avec un commutateur de données d'installation d'emballage (2) selon l'une des revendications précédentes,
**caractérisée**
- **en ce que** qu'au moins une première valeur d'état de l'installation d'emballage représente une première valeur de mesure saisie par un capteur de l'installation d'emballage.

13. Procédé de fonctionnement d'une installation d'emballage, comprenant :
- obtention de premières données d'état d'installation d'emballage via une interface d'entrée de données d'un commutateur de données d'installation d'emballage (2), les premières données d'état d'installation d'emballage représentant au moins une première valeur d'état d'une installation d'emballage ;
- stockage et/ou la réalisation du stockage de l'au moins une première valeur d'état représentée par les premières données d'état d'installation d'emballage, dans une base de données (20), par une interface de stockage de données (10) du commutateur de données d'installation d'emballage ;
- au moins un module de programme (14.1, 14.2) adapté à un dispositif d'emballage (18) de l'installation d'emballage communiquant par l'intermédiaire de l'interface d'entrée de données, et
- l'interface de stockage de données (10) communiquant avec au moins un module de base de données (16) adapté à la base de données (20),
**caractérisé**
- **en ce qu'**une interface d'accès (12) communique avec l'au moins un module de programme (14.1), et
- un accès aux données d'état de l'installation d'emballage est effectué par l'intermédiaire de l'interface d'accès, et
- **en ce que** l'au moins un module de programme (14.1, 14.2) est abonné à l'interface d'accès (12) via un abonnement pour une donnée d'état déterminée, de sorte que l'au moins un module de programme (14.1, 14.2) qui s'abonne est informé d'une modification de cette donnée d'état via l'interface d'accès (12).

14. Procédé selon la revendication 13, comprenant en outre :
- détection d'au moins la première valeur de mesure par un capteur de l'installation d'emballage; et
- communication et/ou réalisation de la communication des données d'état de l'installation d'emballage à l'interface d'entrée de données via un module de programme (14.1, 14.2).
